# EUROPEAN PATENT APPLICATION

(11) **EP 3 745 001 A1**
(43) Date of publication of application: **02.12.2020**
(21) Application number: 19425039.5
(22) Date of filing: 31.05.2019
(51) Int. Cl.: F16H 61/4104, F04B 1/20, F16H 61/42, F16H 61/421, F04B 49/00

(54) **CONTROL APPARATUS FOR A HYDROSTATIC DEVICE**

(71) Applicant: Dana Motion Systems Italia S.R.L., 42124 Reggio Emilia (IT)
(72) Inventor: Bortoli, Andrea, 38122 Trento (IT); Gambini, Luca, 38068 Rovereto TN (IT); Scopesi, Marco, 38068 Rovereto TN (IT)
(74) Representative: Pfenning, Meinig & Partner mbB

(57) **Abstract**

The present disclosure relates to a control apparatus for regulating a hydrostatic device. The control apparatus comprises a housing (12), a displacement sensor (14) mounted to the housing, a second sensor (16, 18) mounted to the housing, a displacement control member (20) for regulating the volumetric displacement of the hydrostatic device wherein the displacement control member is mounted to the housing. A control unit (22) is mounted to the housing. The control unit being connected to sensors and the displacement control member wherein the control unit is configured to actuate the displacement control member based on the signal from the sensors.

## Description

### Technical Field

This disclosure relates to the field of hydrostatic transmission systems, particularly, to hydrostatic devices and, more particularly, to the field of regulating unit and regulating systems for hydrostatic devices.

### Background

A hydrostatic transmission system involves transmission of power through a pressurization of a hydraulic fluid in a closed loop system. The hydrostatic transmission system may include a hydrostatic device that may comprise an axial piston or radial piston device. The hydrostatic device may be operated as pumps or motors. Variable axial piston hydraulic devices may be swash plate type devices or bent axis type devices.

Variable displacement hydrostatic devices, generally, have simple and single function displacement control valves and circuits that require dedicated hardware and mounting layouts. The functioning principle, hence, is hardware limited and present limited tuning possibilities. Generally, each function (pressure related, speed related and with external pressure source correlation) is obtained by a set of components and hardware configurations that are intrinsically not customizable to an end-user.

Variable displacement hydrostatic devices can be regulated in regard to fluid input or discharge volumes. A control device acts on the hydrostatic device through a regulating member. These control devices are designed based on the specific control layout configuration. Thus, different configuration requires different hydraulic blocks and valves.

US2010018384 discloses a hydrostatic drive having a hydrostatic piston motor on which a control unit, which controls the hydrostatic piston motor, is arranged. The control unit is connected to a central control device that controls a drive system, via a first interface. Control signals for controlling the drive system can be transmitted using the first interface. A switch-off signal can be transmitted from the control unit to the central control device and/or from the central control device to the control unit using a second interface.

US2010224058 discloses a regulating device for a hydrostatic piston motor. The regulating device comprises an electronic control unit. The electronic control unit is provided for generating adjusting signals. A feedback element is provided in the regulating device so that the electronic control unit can take into account the respective current position of the pivoting angle of the hydrostatic piston motor. The feedback element scans the adjusting position of the hydrostatic piston motor. The adjusting position scanned by the feedback element is detected without contact by a sensor element integrated in the electronic control unit.

The present disclosure is directed, at least in part, to improving or overcoming one or more aspects of the prior art system.

### Brief Summary of the Invention

The present disclosure describes a control apparatus for regulating a hydrostatic device as defined in claim 1. The control apparatus reduces the complexity and number of configurations required for a set of functions provided by the hydrostatic device.

### Brief Description of the Drawings

The foregoing and other features and advantages of the present disclosure will be more fully understood from the following description of various embodiments, when read together with the accompanying drawings, in which:
Fig. 1 is a perspective view of the control apparatus on a hydrostatic unit according to the present disclosure;
Fig. 1A is a sectional view through the hydrostatic unit of Fig. 1 through line 1A-1A;
Fig. 2 is a cross sectional view through the hydrostatic unit of Fig. 1 through line 2-2;
Fig. 3 is a schematic of a hydrostatic transmission system comprising the control apparatus in a first embodiment;
Fig. 4 is a schematic of a hydrostatic transmission system comprising the control apparatus in a second embodiment;
Fig. 5 is a schematic of a hydrostatic transmission system comprising the control apparatus in a third embodiment; and
Fig. 6 is a table illustrating the emulation of hydraulic motor displacement control strategies according to the present disclosure.

### Detailed Description

This disclosure generally relates to a control apparatus for regulating the volumetric displacement of a hydrostatic unit.

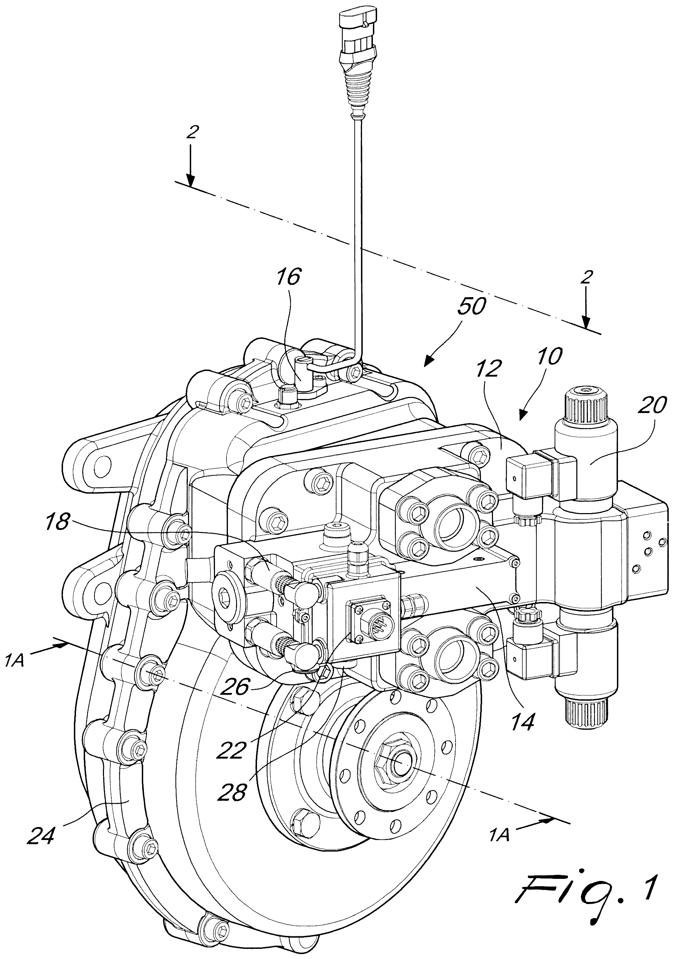

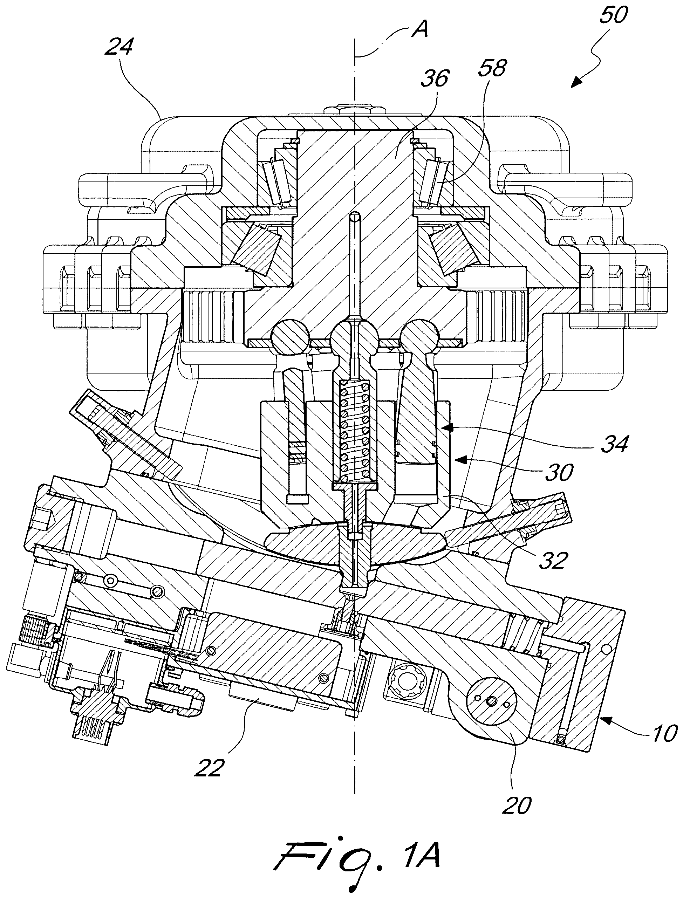

Fig. 1 illustrates a control apparatus **10**. The control apparatus **10** comprises a housing **12**, a displacement sensor **14**, a second sensor **16**, **18**, a displacement control member **20** and a control unit **22**. In an embodiment, the control apparatus **10** is formed on a hydrostatic device **50**. The housing **12** is connected to the casing **24** of the hydrostatic device **50**.

The displacement sensor **14** is mounted to the housing. The second sensor **16**, **18** is mounted to the housing **12**. The second sensor **16**, **18** is selected from a group of sensors comprising: a speed sensor **16** and at least one pressure sensor **18**. The group of sensors may further comprise a temperature sensor. The temperature sensor may be integrated with the displacement sensor **14** or the speed sensor **16** or in the control unit **22**.

In an embodiment, the control apparatus **10** comprises a plurality of sensors **14**, **16**, **18**. The plurality of sensors **14**, **16**, **18** comprise the displacement sensor **14**, at least one pressure sensor **18** and the speed sensor **16**.

With reference to Figs. 1 and 1A,the displacement control member **20** enables the regulation of the volumetric displacement in the hydrostatic device **50**. The displacement control member **20** is mounted to the housing **12**. In an embodiment, the displacement control member **20** is a directional control valve. The directional control valve is configured to actuate a displacement control piston (not shown) coupled to the hydrostatic device **50**. The directional control valve may be a hydraulic electrical proportional control valve. The directional control valve may be 4 way 3 position valve or 3 way 2 position valve. In an alternative embodiment, the displacement control member **20** is a linear electric actuator.

The control unit **22** is mounted to the housing **12**. The displacement sensor **14** is connected to the control unit **22**. The second sensor **16**, **18** is connected to the control unit **22**. The control unit **22** is connected to the displacement control member **20**. The control unit **22** is configured to actuate the displacement control member **20** based on the signals from the displacement sensor **14** and/ or the second sensor **16**, **18**. The control unit **2**2 is configured to actuate the displacement control member **20** based on the signals from a plurality of sensors provided in the control apparatus.

The control unit **22** acquires information from the displacement sensor **14** and/ or the second sensor **16**, **18** and communicates with a vehicle CAN-BUS. The control unit **22** acquires information from the plurality of sensors and communicates with a vehicle CAN-BUS. Based on pre-programmed control strategies, the control unit **22** defines the set point and actuation of the displacement control member **20** for displacement control. The control unit **22** may be configured to accept external signals arriving from sensors already present in the vehicle.

With reference to Fig., 1, the signals from sensors **14**, **16**, **18** are sent to the control unit **22** through an appropriate signal transmission connection. The control unit **22** may be connected to the displacement sensor **14** through an analog line. The control unit **22** may be connected to the at least one pressure sensor **18** through an analog line. The control unit **22** may be connected to the speed sensor **16** through an encoder line. The control unit **22** is connected to the displacement control member **20** through a pulse with modulation (PWM) line. The PWM line may provide power to the displacement control member **20**.

The control apparatus **10** further comprises flushing valve **26**. The flushing valve **26** is mounted to the housing **12**. The control apparatus **10** further comprises a pressure relief valve **28**. The pressure relief valve **28** is mounted to the housing **12**.

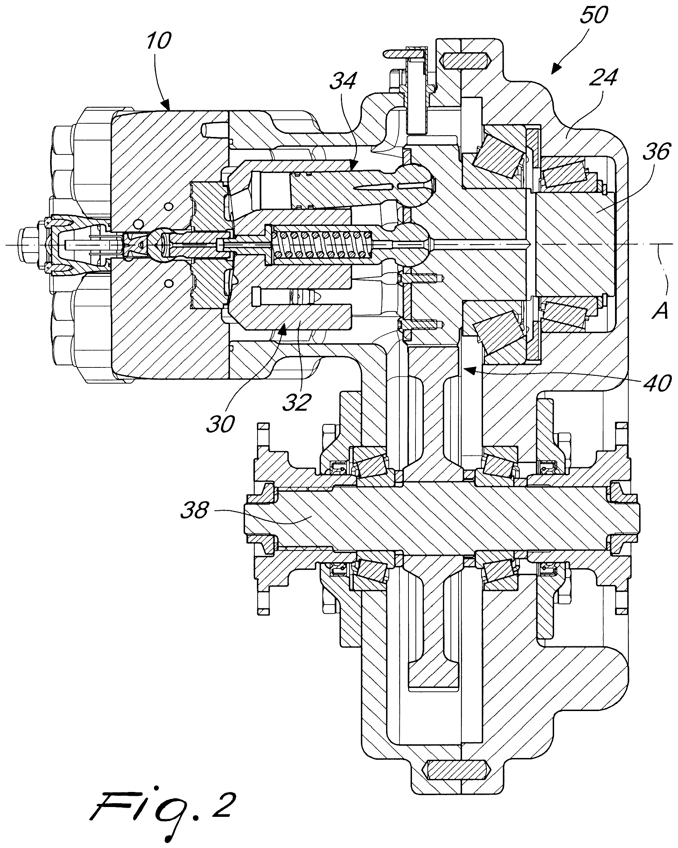

Fig. 2 illustrates an embodiment of the hydrostatic device **50**. The hydrostatic device **50** may comprise a variable axial piston hydraulic device. Hydrostatic device **50** may be of a bent-axis type device. Hydrostatic device **50** may comprise a swash plate type device. Fig. 2 illustrates a hydraulic motor coupled to a gearing transmission. In an alternative embodiment, the hydrostatic device **12** may operate as a pump.

The hydrostatic device **50** comprises the casing **24**. The hydrostatic device **50** has a piston drive assembly **30**. The piston drive assembly **30** comprises a cylinder block **32** having a plurality of cylinder assemblies **34**. The cylinder block **32** is rotatable about a rotation axis **A**. The cylinder block **32** is rotatably supported in the housing **24**. The cylinder assemblies **34** are radially positioned in the cylinder block **32** relative to the rotation axis **A**. The cylinder assemblies **34** are mutually angularly spaced about the rotation axis **A**. The control apparatus **10** is positioned on the hydrostatic device **50** in proximity to the piston drive assembly **30**.

In an embodiment, the hydraulic device **12** may comprise a first transmission shaft **36** and a second transmission shaft **38** when the hydrostatic device **50** is configured as a motor. The first and second transmission shafts **36**, **38** may be coupled through a gearing assembly **40**. The gearing assembly **40** may comprise mesh gear wheels.

The mounting of the sensors **14**, **16**, **18** in the housing **12** of the control apparatus improves the expected performance of the hydrostatic device **50** under different conditions. The information relating to pressure, displacement and rotational speed, in combination of the efficiency map of the hydrostatic device **50**, enables an estimation of torque and power that may be provided by the piston drive assembly **30**. This may lead to a better vehicle controllability and possible failure detection.

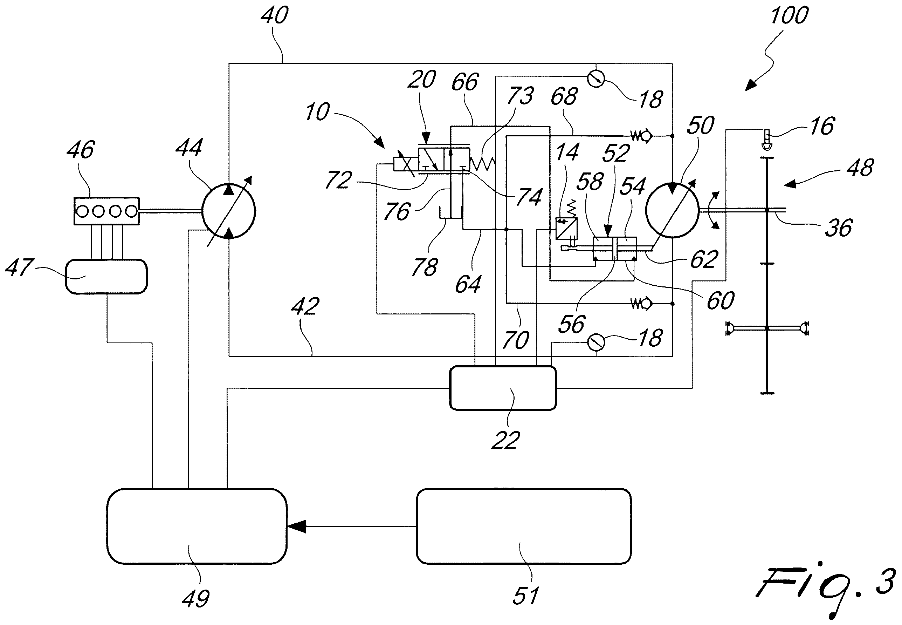

Figs. 3 to 5 illustrate a hydrostatic system **100**. The hydrostatic system **100** comprises the control apparatus **10** and the hydrostatic device **50**. The control apparatus **10** is coupled to the hydrostatic device **50**. The hydrostatic system **100** comprises first and second work lines **40**, **42** for the transmission of hydraulic fluid to the hydrostatic device **50**.

The first and second work lines **40**, **42** interconnect a hydraulic pump **44** and the hydrostatic device **50**. Hydraulic fluid in the first and second work lines **40**, **42** enable the transmission of energy from the hydraulic pump **44** to the hydrostatic device **50**. The first work line **40** is provided for transmission of a hydraulic fluid at a first pressure. The second work line **42** is provided for transmission of the hydraulic fluid at a second pressure. The first and the second pressures are different. The first and second work lines **40**, **42** are connected to the hydrostatic device **50**.

The hydraulic pump **44** may be driven by an internal combustion engine **46**. The internal combustion engine **46** has an engine control unit **47**. The hydraulic pump **44** may be coupled to a boost pump (not shown). The hydraulic pump **44**, engine control unit **47** and the boost pump are controlled by a vehicle control unit **49**. The vehicle control unit **49** supervise the secondary control units of a vehicle. The hydrostatic device **50** operates as a motor and is connected to a transmission **48** of a vehicle. The vehicle control unit **49** may be controlled through a driver input unit **51**.

The control unit **22** is connected to the vehicle control unit **49** through a CAN-BUS interface. The vehicle control unit **49** may send the displacement target to the control unit **22**. Reaction time and control gains may be customized based through a dedicated configuration tool. Control algorithms may be directly implemented on the control unit **22** or on the vehicle control unit **49**. The control unit **22** actuates the displacement control member **20** accordingly.

The at least one pressure sensor **18** is configured to detect the hydrostatic pressure in either the first or the second work lines **40**, **42**. The data relating to hydrostatic pressure may be required for pressure dependent displacement control. Signals relating to the hydrostatic pressure is sent to the control unit **22**. The control unit **22** is programmed to compute an estimation of the torque provided by the piston drive assembly **30**, based on the information relating to the hydrostatic pressure.

In an embodiment, the hydrostatic transmission system further comprising a first and a second pressure sensors **18**, **18**. The first pressure sensor **18** is configured to detect the hydrostatic pressure in the first work line **40** and the second pressure sensor **18** is configured to detect the hydrostatic pressure in the second work line **42**.

The speed sensor **16** is configured to detect the rotational speed of the piston drive assembly **30**. Signals relating to the rotational speed of the piston drive assembly **30** is sent to the control unit **22**. The control unit **22** is programmed to compute the rotational speed of the piston drive assembly **30** to permit over speed limitations, vehicle speed limitation and cruise control functionalities. The speed sensor **16** is configured to monitor the rotation speed of the transmission **48**. In an embodiment, the speed sensor **16** may be configured to monitor the rotation speed of the hydrostatic motor shaft, i.e. the second transmission shaft **36**. In an alternative embodiment, the speed sensor **16** is configured to detect the rotational speed of an input shaft. The speed sensor **16** is configured to detect the rotational speed of a gear on the input shaft.

The temperature sensor is configured to detect the temperature of the piston drive assembly **30**. Signals relating to the temperature of the piston drive assembly **30** is sent to the control unit **22**. Temperature data may be used to warn for low temperature wear or overheating. The control unit **22** is programmed to identify possible cold start problems and provide for over- heating protection. The temperature data may be used for active loop flushing valve management. Active loop flushing may be used to save energy.

The hydrostatic transmission system **100** may comprises a loop flushing valve **80**. In an embodiment, the loop flushing valve **80** may be fluidly connected between the first and second work lines **40**, **42** and the hydraulic device **50**. The loop flushing valve **80** alternatively fluidly connects the hydraulic device **50** to the first and second work lines **40**, **42**.

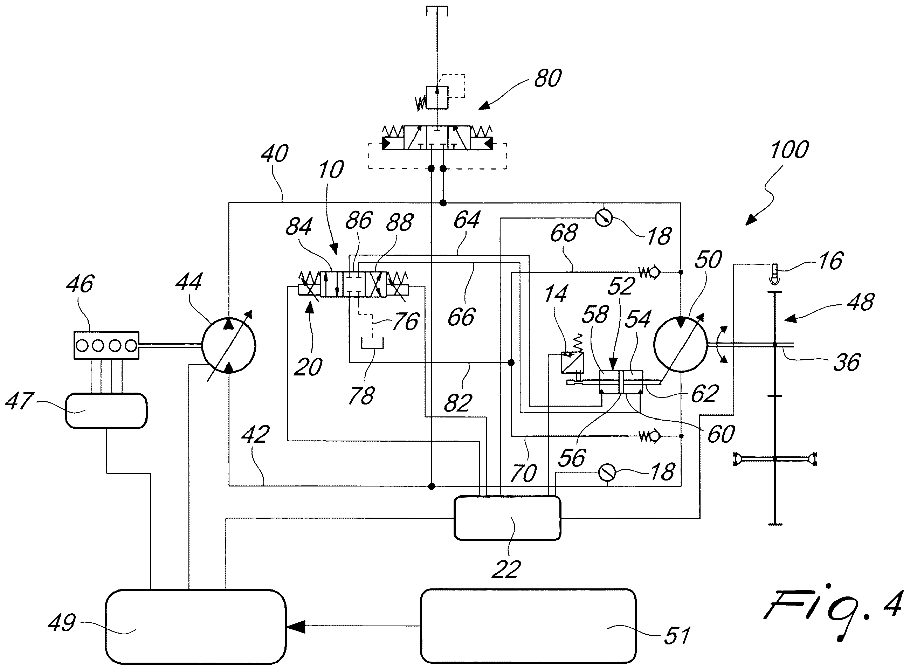

With reference to Figs. 3 and 4, the hydrostatic transmission system **100** comprises a displacement control piston **52**. The volumetric displacement of the hydrostatic device **50** is determined by the displacement control piston **52**.

The displacement control piston **52** is a double-acting cylinder **54** in which a piston **56** is disposed. The piston **56** divides the cylinder **54** into a first chamber **58** and a second chamber **60**. The piston **56** is pressure loadable in both chambers **58**, **60** with hydraulic pressure. A piston rod **62** extends from opposite actuatable surfaces of the piston **56**. The actuating movement of the actuating piston **56** generates a variation of the volumetric displacement of the hydrostatic device **50** through the piston rod **62**. The volumetric displacement of hydrostatic device **50** is varied through a transmission of hydraulic pressure being sent to the displacement control piston **52**.

The displacement sensor **14** is configured to detect the position of the displacement control piston **52** so as to derive the volumetric displacement of the hydrostatic device **50**. In particular the displacement sensor **14** is configured to detect the position of the piston rod **62**. The signals on the position of the piston **56**, and in particular, the piston rod **62**, from the displacement sensor **14** is sent to the control unit **22**. The control unit **22** is programmed to compute the volumetric displacement of the hydrostatic device **50**.

The displacement control member **20** is a directional control valve. The directional control valve **20** is coupled to the displacement control piston **52**. The directional control **20** valve is configured to send an actuation pressure to the displacement control piston **52**. The directional control valve **20** is connected by a first actuating line **64** to the first chamber **58** and by a second actuating line **66** to the second chamber **60**.

With reference to Fig. 3, in the first embodiment, the directional control valve **20** is a 3 way 2 position directional control valve. The first actuating line **64** is further connected to the first work line **40** through a first fluid line **68**. The first actuating line **64 66** is further connected to the second work line **42** through a second fluid line **70**.

In a first position **72**, the directional control valve **20** connects the first actuating line **64** to second actuating line **66**. In a second position **74**, the directional control valve **20** disconnects first actuating line **64** from the second actuating line **66**. The second actuating line **66** is connected to a drain line **76** leading to a tank **78**.

Actuation signal from the control unit **22** moves the directional control valve **20** from the second position **74** to the first position **72**. The return spring **73** is biased to move the directional control valve **20** from the first position **72** to the second position **74**.
With reference to Fig. 4, in the second embodiment, the directional control valve **20** is a 4way 3 position directional control valve. The actuation and return of the directional control valve **20** is controlled by the control unit **22**. The directional control valve **20** is connected to the control unit **22** through a pair of PWM lines. The first fluid line **68** and second fluid line **70** are connected to a third fluid line **82**. The third fluid line **82** extends from the connection with the first and second fluid lines **68**, **70** to the directional control valve **20**.

In a first position **84**, the directional control valve **20** connects the first actuating line **64** to the third fluid line **82** and connects the second actuating line **66** to the drain line **76** leading to a tank **78**. In a second position **86**, the directional control valve **20** disconnects the first actuating line **64** from the third fluid line **82** and disconnects the second actuating line **66** from the drain line **76**. In a third position **88**, the directional control valve **20** connects the first actuating line **64** to the drain line **76** leading to a tank **78** and connects the second actuating line **66** to the third fluid line **82**.

Actuation signal from the control unit **22** moves the directional control valve **20** from the second position **86** to the first position **84** or to the third position **88**. Actuation signal from the control unit **22** moves the directional control valve **20** from the first position **84** to second position **86** or from the third position **88** to the second position **86**.

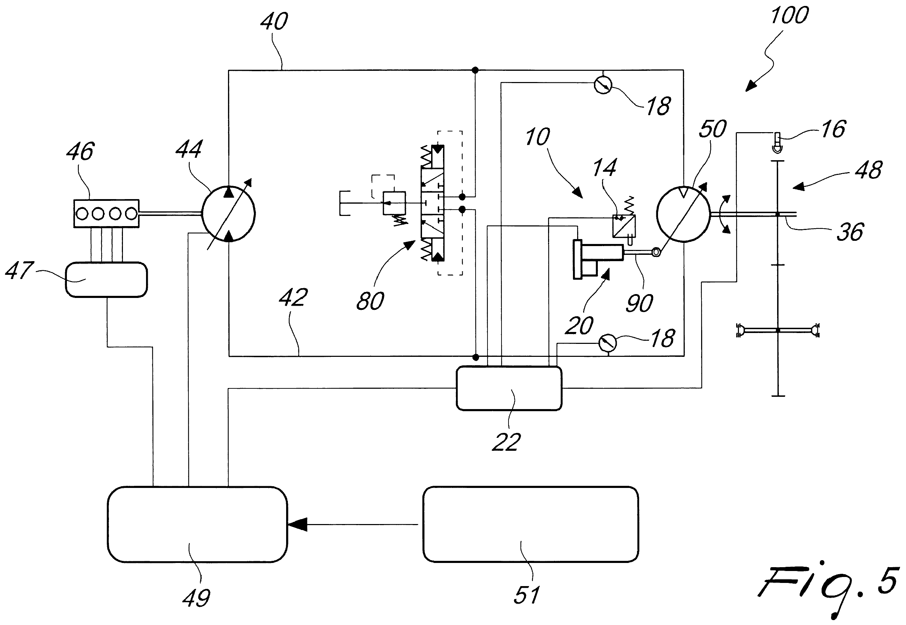

With reference to Fig. 5, in the third embodiment, the displacement control member **20** is a linear actuator. The linear actuator is coupled to the hydrostatic device **50**. The volumetric displacement of the hydrostatic device **50** is determined by the linear actuator **20**. The linear actuator **20** is an electric linear actuator. Extension and retraction of an actuation rod **90** of the linear actuator **20** is effected by the control unit **22**.

The displacement sensor **14** is configured to detect the position of the linear actuator so as to derive the volumetric displacement of the hydrostatic device **50**. In particular the displacement sensor **14** is configured to detect the position of the actuation rod **90**. The signals on the position of the actuation rod **90**, from the displacement sensor **14** is sent to the control unit **22**. The control unit **22** is programmed to compute the volumetric displacement of the hydrostatic device **50**.

In the foregoing, displacement of the hydrostatic unit **50** is controlled through the displacement control member **20** with a hydraulic valve (via PWM signal). Alternate means for controlling a linear piston may be adopted such as: a rack and pinion, an endless screw or with recirculating ball screw or any other possible ways to generate a linear motion.

The skilled person would appreciate that foregoing embodiments may be modified or combined to obtain the control apparatus **10** of the present disclosure.

### Industrial Applicability

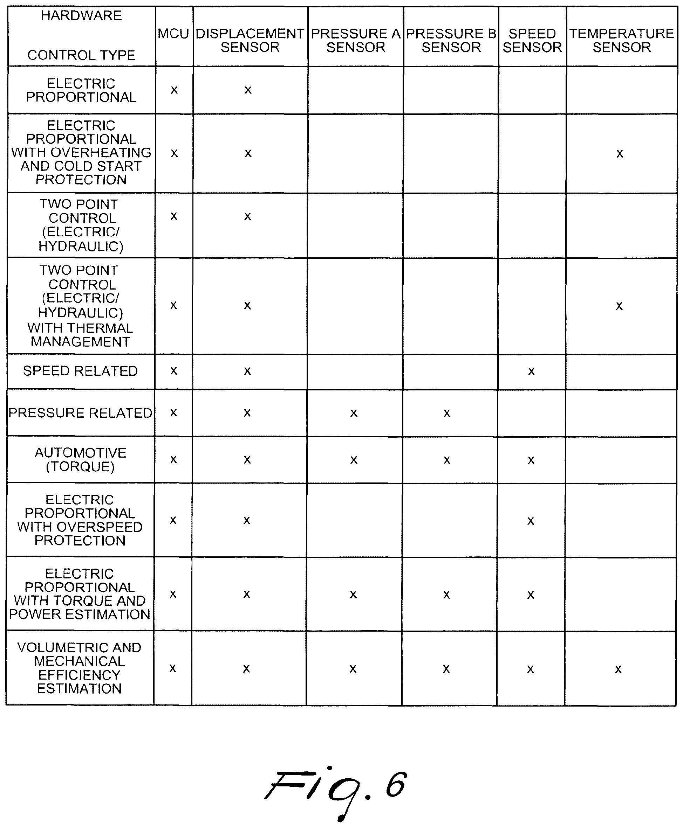

This disclosure describes a control apparatus **10** for regulating a hydrostatic device. The control apparatus **10** enables emulation of the hydraulic motor displacement control strategies shown in Fig. 6. All these functionalities can be obtained by implementing a programmable control unit control unit **22** that is able to read the sensors' signals, to communicate with the other vehicle's control units through CAN-BUS, and to actuate the displacement control system.

The control apparatus **10** provides for a reduction in the complexity and number of configurations required for a set of functions of the hydrostatic device. The control apparatus **10** enables having a plurality of functions that does not require different hardware configurations. The plurality of functions are emulated by the hydrostatic control unit. Using a plurality of sensors and software configurations enables the implementation of different displacement control logics without the need of different hardware configurations.

In addition, the control apparatus **10** enhances the control of the hydrostatic device. The electronic controlled displacement is less influenced by manufacturing and assembly uncertainties, so as to increase the system reliability and repeatability on different working conditions.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A control apparatus (10) for regulating a hydrostatic device (50), the control apparatus (10) comprising:
a housing (12);
a displacement sensor (14) mounted to the housing (12);
a second sensor (16, 18) mounted to the housing (12);
a displacement control member (20) for regulating the volumetric displacement of the hydrostatic device (50) wherein the displacement control member (20) is mounted to the housing (12); and
a control unit (22) mounted to the housing (12), the control unit (22) being connected to sensors (14, 16, 18) and the displacement control member (20) wherein the control unit (22) is configured to actuate the displacement control member (20) based on the signal from the sensors (14, 16, 18).

2. The control apparatus (10) of claim 1 wherein the displacement control member (20) is a directional control valve.

3. The control apparatus (10) of claim 2 wherein the directional control valve (20) is configured to actuate a displacement control piston coupled to the hydrostatic device (50).

4. The control apparatus (10) of claim 1 wherein the displacement control member (20) is a linear electric actuator.

5. The control apparatus (10) of any one of preceding claims wherein the second sensor (16, 18) is selected from a group comprising: at least one pressure sensor (18) and a speed sensor (16).

6. The control apparatus (10) of claim 5 further comprising a plurality of sensors (14, 16, 18) wherein the plurality of sensors (14, 16, 18) comprise a displacement sensor (14), at least one pressure sensor (18) and a speed sensor (16).

7. The control apparatus (10) of claims 5 or 6 further comprising a temperature sensor wherein the temperature sensor is integrated in the speed sensor (16) or in the control unit 22.

8. The control apparatus (10) of any one of preceding claims further comprising flushing and pressure relief valves (26, 28) wherein the flushing and pressure relief valves (26, 28) are mounted to the housing (12).

9. A hydrostatic transmission system (100) comprising:
a control apparatus (10) according to any one of preceding claims 1 to 4;
a hydrostatic device (50) wherein the control apparatus (10) is coupled to the hydrostatic device (50); and
first and second work lines (40, 42) for the transmission of hydraulic fluid to the hydrostatic device (50).

10. The hydraulic transmission system (100) of claim 9 comprising at least one pressure sensor (18) configured to detect the hydrostatic pressure in either the first or the second work lines (40, 42).

11. The hydraulic transmission system (100) of claim 10 further comprising a second pressure sensor (18) wherein the first pressure sensor (18) is configured to detect the hydrostatic pressure in the first work line (40) and the second pressure sensor (18) is configured to detect the hydrostatic pressure in the second work line (42).

12. The hydraulic transmission system (100) of claims 9, 10 or 11 comprising a speed sensor (16) wherein the hydrostatic device (50) comprises a piston drive assembly (30) and wherein the speed sensor (16) is configured to detect the rotational speed of the piston drive assembly (30).

13. The hydraulic transmission system (100) of claims 9, 10 or 11 comprising a speed sensor (16) wherein the speed sensor (16) is configured to detect the rotational speed of an input shaft.

14. The hydraulic transmission system (100) of claim 9 further comprising a displacement control piston (52) wherein the displacement sensor (14) is configured to detect the position of the displacement control piston (52) so as to derive the volumetric displacement of the hydrostatic device (50).

15. The hydraulic transmission system (100) of any one of preceding claims 7 to 11 further comprising a loop flushing valve (80) fluidly connected between the first and second work lines (40, 42) and the fluid reservoir (78).
